# EUROPÄISCHE PATENTSCHRIFT

(11) **EP 1 643 175 B1**
(45) Veröffentlichungstag und Bekanntmachung des Hinweises auf die Patenterteilung: **09.02.2011**
(21) Anmeldenummer: 06000177.3
(22) Anmeldetag: 28.07.2004
(51) Int. Cl.: F16K 31/122

(54) **Pneumatischer Ventilantrieb**
Pneumatic valve actuator
Actionneur pneumatique d'une soupape

(30) Priorität: 06.08.2003 DE 10336065
(43) Veröffentlichungstag der Anmeldung: 05.04.2006
(62) Teilanmeldung aus: 04017860.0
(73) Patentinhaber: Bürkert Werke GmbH, 74653 Ingelfingen (DE)
(72) Erfinder: Hettinger, Gerhard, 74653 Ingelfingen (DE)
(74) Vertreter: Prinz & Partner

(56) Entgegenhaltungen:
- DE-A- 19 641 073
- US-A1- 2001 028 049

## Beschreibung

Die Erfindung betrifft einen pneumatischen Ventilantrieb mit einem Gehäuse, das einen Zylinder aufweist, in dem ein mit einer axialen Spindel verbundenen Kolben axial geführt und an seinem Umfang gegen die Innenwand des Zylinders abgedichtet ist.

Derartige pneumatische Ventilantriebe werden seit vielen Jahren erfolgreich in der industriellen Prozeß-Steuerung eingesetzt. Die vorliegende Erfindung verbessert diese Ventilantriebe in mehreren Aspekten.

Aus DE 196 41 073 A ist ein pneumatischer Ventilantrieb gemäß dem Oberbegriff des Patentanspruchs 1 bekannt, der eine separate zylindrische Laufbuchse für den Kolben und an jedem axialen Ende der Laufbuchse eine Stirnwand aus Kunststoff hat. Der mit einer axialen Spindel verbundene Kolben ist in der Laufbuchse axial geführt und an seinem Umfang gegen die Innenwand der Laufbuchse abgedichtet. An einer der Stirnwände ist ein Druckluftanschluss gebildet.

Bei dem erfindungsgemäßen Ventilantrieb weist eine der Stirnwände auf ihrer von der zylindrischen Laufbuchse abgewandten Fläche eine einheitliche Schnittstelle zum optionalen Anschließen unterschiedlicher Ausführungen von Ansteuermodulen auf, die pneumatische und/oder elektrische Steuermittel umfassen.

In einer bevorzugten Ausführungsform ist an einer der Stirnwände ein erster zylindrischer Außenwandteil angeformt. An der anderen Stirnwand ist ein zweiter zylindrischer Außenwandteil angeformt, der mit dem ersten Außenwandteil verschraubt ist. Die Außenwandteile sind von einer zylindrischen Hülle aus einem dünnwandigen rostfreien Stahl umgeben, die zwischen den Stirnwänden axial eingesetzt und gegebenenfalls zwischen diesen verspannt ist. Die Laufbuchse kann ihrerseits zwischen den Stirnwänden axial eingespannt sein. Durch die Trennung von Gehäuse und Laufbuchse können die verwendeten Kunststoffe getrennt hinsichtlich der Gleiteigenschaften sowie der Festigkeits- und der chemischen bzw. thermischen Eigenschaften optimiert werden. Die zylindrische Hülle aus einem dünnwandigen rostfreien Stahl schließt im wesentlichen spaltfrei und dicht an den Stirnwänden an. Das Gehäuse des Ventilantriebs kann somit aus einem relativ kostengünstigen Kunststoff hergestellt werden, obwohl die gesamte Mantelfläche des Ventilantriebs mit optischen und hygienischen Eigenschaften ausgestattet ist, die hohen Ansprüchen genügen, so daß ein Einsatz des Ventilantriebs in einer Umgebung ermöglicht wird, die diesbezüglich hohe Anforderungen stellt, beispielsweise im Bereich der Pharmatechnik, Biotechnik oder Lebensmittelverarbeitung. Herkömmliche Ventilantriebe für diesen Einsatzbereich haben massive Gehäuse aus rostfreiem Stahl und sind aus diesem Grunde sehr viel teurer.

Die pneumatischen Luftkanäle für Zuluft, Abluft und Steuerluft sind vorzugsweise in dem Gehäuse des Ventilantriebs integriert. Insbesondere ist von einer der Stirnwände ausgehend ein axialer Steuerluftkanal zwischen der Außenfläche der Laufbuchse und der Innenfläche eines der Außenwandteile gebildet, der in den Raum zwischen der anderen Stirnwand und dem Kolben mündet. Bei der bevorzugten Ausführungsform enthält das Gehäuse des auf den Ventilantrieb angesetzten Ansteuermoduls ein pneumatisches Steuerventil und einen pneumatischen Verteilerblock, die den Steuerluftkanal selektiv mit einem Druckluftkanal oder mit einem Abluftkanal verbinden. Druckluftkanal und Abluftkanal sind vorzugsweise in der Stirnwand ausgebildet, an die der Steuerkopf angesetzt ist. Durch diesen Aspekt der Erfindung entfallen die bei herkömmlichen pneumatischen Ventilantrieben üblichen Schlauchleitungen für die Steuerluft.

Gemäß einem weiteren Aspekt der Erfindung wird ein pneumatischer Ventilantrieb mit einem Gehäuse geschaffen, das einen Zylinder und an jedem axialen Ende des Zylinders eine Stirnwand aufweist. Ein mit einer axialen Spindel verbundener Kolben ist in dem Zylinder axial geführt und an seinem Umfang gegen den Zylinder abgedichtet. An einer der Stirnwände schließt ein Ansteuermodul an, das mit dem Ventilantrieb zu einem einheitlichen Gerät integriert ist. Dieses Ansteuermodul kann pneumatische und/oder elektrische und/oder mechanische Steuermittel verschiedenster Art umfassen.

Weitere Merkmale und Vorteile der Erfindung ergeben sich aus der folgenden Beschreibung bevorzugter Ausführungsformen unter Bezugnahme auf die beigefügten Zeichnungen. In den Zeichnungen zeigen:
- Figur 1 einen Axialschnitt einer Ausführungsform eines pneumatischen Ventilantriebs mit Steuerkopf;
- Figur 2 einen Schnitt entlang Linie II-II in Figur 1;
- Figur 3 einen Schnitt entlang Linie III-III in Figur 1;
- Figur 4 einen vergrößerten Teilausschnitt aus Figur 1; und
- Figur 5 eine Teilansicht des Ventilantriebs ohne Steuerkopf.

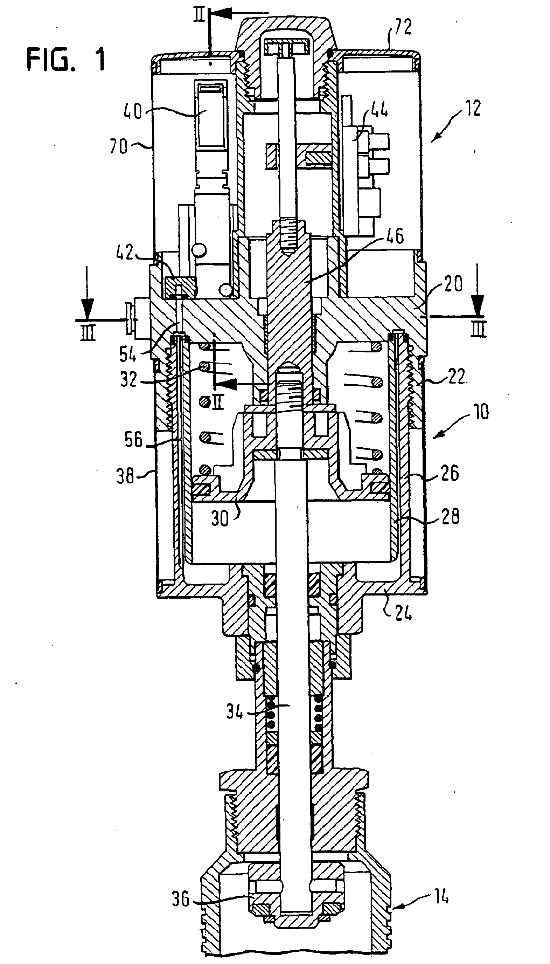

In Figur 1 dargestellt ist ein allgemein mit 10 bezeichneter pneumatischer Ventilantrieb mit einem auf seiner einen Stirnseite angesetzten Steuerkopf 12 und einer auf seiner anderen Stirnseite angeschlossenen Ventilarmatur 14. Der Steuerkopf 12 ist nur ein Beispiel für eine Vielzahl von pneumatischen oder elektrischen/elektronischen Ansteuermodulen, die mit dem Ventilantrieb 10 kombiniert werden können. Der Ventilantrieb hat ein Gehäuse, das im wesentlichen aus zwei Teilen zusammengesetzt ist. Der erste Gehäuseteil umfaßt eine Stirnwand 20 mit einem angeformten zylindrischen Außenwandteil 22. Der zweite Gehäuseteil umfaßt eine Stirnwand 24 mit einem angeformten zylindrischen Außenwandteil 26. Zwischen den Stirnwänden 20, 24 ist eine zylindrische Laufbuchse 28 axial eingespannt. Im Inneren der Laufbuchse 28 ist ein Kolben 30 geführt, der an seinem Umfang gegen die Innenfläche der Laufbuchse 28 abgedichtet ist. Der Kolben 30 wird durch eine an der Stirnwand 20 abgestützte Druckfeder 32 zur Stirnwand 24 hin beaufschlagt. An dem Kolben 30 ist eine Spindel 34 angeschlossen, die an ihrem freien Ende ein Ventilglied 36 trägt. Die zylindrischen Außenwandteile 22, 26 sind miteinander verschraubt und umgeben die Laufbuchse 28. Die Außenwandteile 22, 26 sind ihrerseits von einer zylindrischen Hülle 38 umgeben, die aus einem dünnwandigen rostfreien Stahl besteht. Die Hülle 38 ist zwischen den Stirnwänden 20, 24 axial verspannt und durch je eine Dichtung abgedichtet. Die Hülle 38 schließt praktisch spaltfrei an der Stirnwand 24 und an dem Umfang der Stirnwand 20 an. Sie verleiht dem Ventilantrieb ein hochwertiges Erscheinungsbild und erfüllt zugleich die hohen Ansprüche an Materialbeschaffenheit und Formgestaltung, die in industriellen Bereichen wie Pharmatechnik, Biotechnik und Lebensmittelverarbeitung gelten.

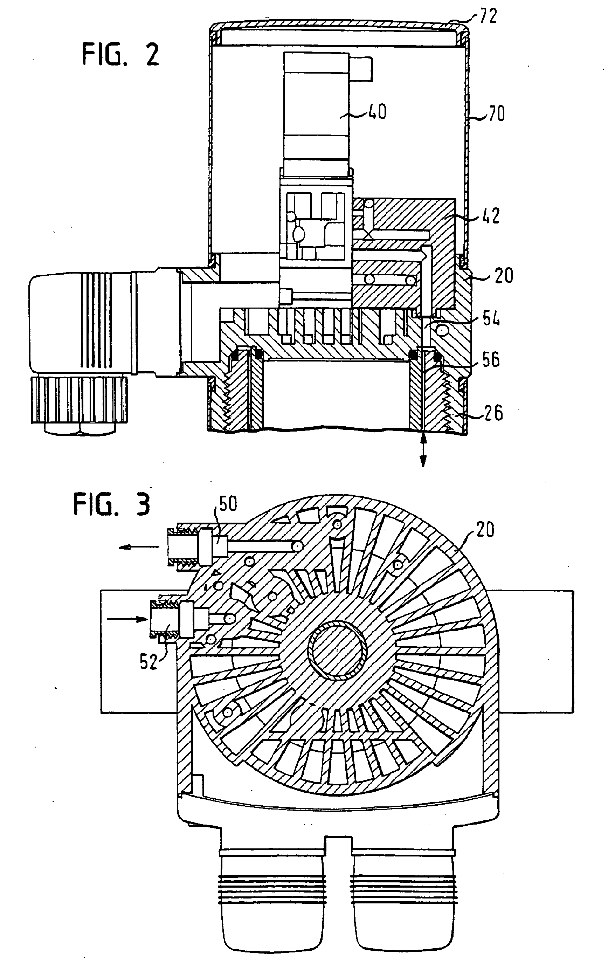

Die Stirnwand 20 bildet auf ihrer vom Kolben 30 abgewandten Seite eine einheitliche Schnittstelle für verschiedenste Ausführungen von Steuerköpfen. Der in Figur 1 und Figur 2 gezeigte Steuerkopf enthält ein pneumatisches Steuerventil 40 und einen pneumatischen Steuerblock 42. Ferner enthält er einen Positionssensor 44, der mit dem Kolben 30 durch eine die Stirnwand 20 koaxial durchragende Koppelspange 46 verbunden ist.

In die Stirnwand 20 sind Anschlußkanäle für Zuluft und Abluft integriert. So zeigt Figur 3 einen Abluftkanal 50, der am Außenumfang der Stirnwand 20 mündet, und einen Zuluftkanal 52, der ebenfalls am Außenumfang der Stirnwand 20 mündet. Diese Kanäle 50, 52 sind mit dem pneumatischen Verteilerblock 42 verbunden, der seinerseits mit dem pneumatischen Steuerventil verbunden ist. Von dem pneumatischen Steuerventil 40 verläuft ein Steuerluftkanal durch den Verteilerblock 42 zu einer die Stirnwand 20 axial durchquerenden Bohrung 54, die in einem zwischen dem Außenumfang der Laufbuchse 28 und der Innenfläche des Außenwandteils 26 verlaufenden Steuerluftkanal 56 fortgesetzt wird. Der Steuerluftkanal 56 mündet in den Zylinderraum unter dem Kolben 30.

Die Stirnwand 24 bildet mit ihrer vom Kolben 30 abgewandten Stirnseite eine einheitliche Schnittstelle zum Anschließen verschiedenster Ausführungen von Ventil-Armaturen. In Figur 1 ist beispielshalber eine Ventil-Armatur mit dem Ventilkörper 36 für ein Sitzventil dargestellt.

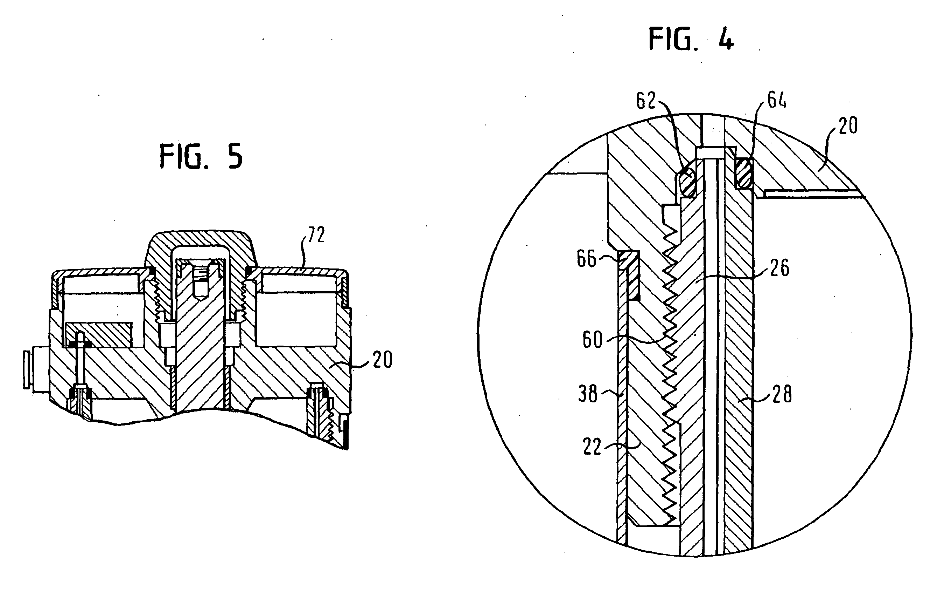

Figur 4 zeigt bei 60 die Verschraubung des Außenwandteils 22 mit dem Außenwandteil 26, die Abdichtung dieser Wandungsteile aneinander durch eine eingefügte Ringdichtung 62 sowie die Einspannung und Abdichtung der Laufbuchse 28 mit einer Ringdichtung 64, die in eine Nut der Stirnwand 20 eingelegt ist. Ferner ist der Anschluß der zylindrischen Hülle 38 am Übergang zwischen Stirnwand 20 und Außenwandteil 22 unter Einfügung einer Dichtung 66 zu erkennen.

Der Steuerkopf 12 weist ein ähnliches Erscheinungsbild wie der Ventilantrieb 10 auf. Insbesondere hat auch er eine zylindrische Hülle 70, die aus einem dünnwandigen rostfreien Stahl besteht. Sie ist zwischen der Stirnwand 20 und einem gegenüberliegenden Deckel 72 axial eingespannt. Bei Ausführungen, die keinen Steuerkopf benötigen, kann der Deckel 72 unmittelbar an die Stirnwand 20 angesetzt werden, die auch für diesen Deckel 72 eine passende Schnittstelle bildet, wie in Figur 5 gezeigt.

## Patentansprüche

1. Pneumatischer Ventilantrieb (10) mit einem Gehäuse, das eine zylindrische Laufbuchse (28) und an jedem axialen Ende der zylindrischen Laufbuchse (28) eine Stirnwand (20, 24) aufweist, einem mit einer axialen Spindel (34) verbundenen Kolben (30), der in der zylindrischen Laufbuchse (28) axial geführt und an seinem Umfang gegen die zylindrische Laufbuchse (28) abgedichtet ist, **dadurch gekennzeichnet, dass** eine (20) der Stirnwände auf ihrer von der zylindrischen Laufbuchse (28) abgewandten Fläche eine einheitliche Schnittstelle zum optionalen Anschließen unterschiedlicher Ausführungen von Ansteuermodulen (12) aufweist, die pneumatische und/oder elektrische Steuermittel umfassen.

2. Pneumatischer Ventilantrieb nach Anspruch 1, **dadurch gekennzeichnet, dass** an einer (20) der Stirnwände ein erster zylindrischer Außenwandteil (22) und an der anderen Stirnwand (24) ein zweite zylindrischer Außenwandteil (26) angeformt ist, der mit dem ersten Außenwandteil (22) verbunden ist, wobei von einer der Stirnwände (20) ausgehend ein axialer Steuerluftkanal (56) zwischen der Außenfläche der Laufbuchse (28) und der Innenfläche eines der Außenwandteile gebildet ist und in den Raum zwischen der anderen Stirnwand und dem Kolben mündet; wobei die Steuermittel des Ansteuermoduls (12) ein pneumatisches Steuerventil (40) und einen pneumatischen Verteilerblock (42) aufweisen, die den Steuerluftkanal (56) selektiv mit einem Zuluftkahal (52) oder mit einem Abluftkanal (50) verbinden.

3. Pneumatischer Ventilantrieb (10) nach Anspruch 1 oder 2, bei dem die zylindrische Laufbuchse (28) von einer zwischen den Stirnwänden (20, 24) axial verspannten zylindrischen Hülle (38) aus dünnwandigem Material umgeben ist.

4. Pneumatischer Ventilantrieb (10) nach Anspruch 1, 2 oder 3, bei dem das Ansteuermodul eine die Steuermittel umgebende zylindrische Hülle (70) aus dünnwandigem Material aufweist, die zwischen einer Stirnwand (20) und einem Deckel (72) axial eingespannt ist.

5. Pneumatischer Ventilantrieb (10) nach Anspruch 1, bei dem an Stelle eines Ansteuermoduls (12) optional ein Blinddeckel an der von der Stirnwand gebildeten einheitlichen Schnittstelle angeschlossen werden kann.

## Claims

1. A pneumatic valve actuator (10) comprising a housing which has a cylindrical liner (28) and a front wall (20, 24) next to each axial end of the cylindrical liner (28), a piston (30) which is connected to an axial shaft (34) and is axially guided in the cylindrical liner (28) and is sealed on its circumference against the cylindrical liner (28), **characterized in that** one (20) of the front walls has a unitary interface on its surface facing away from the cylindrical liner (28) for optionally connecting different configurations of control modules (12) which include pneumatic and/or electrical control means.

2. The pneumatic valve actuator according to claim 1, **characterized in that** a first cylindrical outer wall part (22) is formed integrally with one (20) of the front walls and a second cylindrical outer wall part (26) is formed integrally with the other front wall (24) and is connected with the first outer wall part (22), an axial control air duct (56) emerging from one of the front walls (20) being formed between the outer surface of the liner (28) and the inner surface of one of the outer wall parts and opening out into the space between the other front wall and the piston, the control means of the control module (12) including a pneumatic control valve (40) and a pneumatic manifold block (42) which selectively connect the control air duct (56) to an air inlet duct (52) or to an exhaust air duct (50).

3. The pneumatic valve actuator (10) according to claim 1 or 2, in which the cylindrical liner (28) is surrounded by a cylindrical casing (38) made from a thin-walled material and axially braced between the front walls (20, 24).

4. The pneumatic valve actuator (10) according to claim 1, 2 or 3, in which the control module includes a cylindrical casing (70) made from a thin-walled material, surrounding the control means and which is axially clamped between a front wall (20) and a cover (72).

5. The pneumatic valve actuator (10) according to claim 1, in which in place of a control module (12) a blind cover can be optionally connected to the unitary interface formed by the front wall.

## Revendications

1. Actionneur pneumatique de valve (10), comportant un boîtier qui présente une boîte cylindrique de coulissement (28) et, à chaque extrémité axiale de la boîte cylindrique de coulissement (28), une paroi frontale (20, 24), un piston (30) relié à une broche axiale (34), lequel est guidé axialement dans la boîte cylindrique de coulissement (28) et étanché sur sa périphérie par rapport à la boîte cylindrique de coulissement, **caractérisé en ce qu'**une des parois frontales (20) présente sur sa face détournée de la boîte cylindrique de coulissement (28) une interface uniforme pour raccorder en option différentes configurations de modules de pilotage (12) qui comprennent des moyens de commande pneumatiques et/ou électriques.

2. Actionneur pneumatique de valve (10) selon la revendication 1, **caractérisé en ce que** sur une des parois frontales (20) est façonnée une première partie cylindrique de paroi extérieure (22) et sur l'autre paroi frontale est façonnée une deuxième partie cylindrique de paroi extérieure (26) qui est reliée à la première partie cylindrique de paroi extérieure (22), un canal d'air de commande (56) étant formé en partant depuis une des parois frontales (20) entre la surface extérieure de la boîte de coulissement (28) et la surface intérieure d'une des parties de paroi extérieure et débouchant dans l'espace entre l'autre paroi frontale et le piston ; les moyens de commande du module de pilotage (12) présentant une soupape de commande (40) pneumatique et un bloc de distribution (42) pneumatique qui relient le canal d'air de commande (56) sélectivement à un canal d'admission d'air (52) ou à un canal d'évacuation d'air (50).

3. Actionneur pneumatique de valve (10) selon la revendication 1 ou 2, dans lequel la boîte cylindrique de coulissement (28) est entourée par une enveloppe cylindrique (38) en matériau à paroi mince qui est serrée axialement entre les parois frontales (20, 24).

4. Actionneur pneumatique de valve (10) selon la revendication 1, 2 ou 3, dans lequel le module de pilotage présente une enveloppe cylindrique (70) en matériau à paroi mince, qui entoure les moyens de commande et qui est serrée axialement entre une paroi frontale (20) et un couvercle (72).

5. Actionneur pneumatique de valve (10) selon la revendication 1, dans lequel à la place d'un module de pilotage (12), on peut raccorder en option un couvercle aveugle à l'interface uniforme formée par la paroi frontale.
